# EUROPÄISCHE PATENTANMELDUNG

(11) **EP 2 546 681 A2**
(43) Veröffentlichungstag der Anmeldung: **16.01.2013**
(21) Anmeldenummer: 12004819.4
(22) Anmeldetag: 28.06.2012
(51) Int. Cl.: G01V 3/12

(54) **Verfahren und Vorrichtung zur Sicherheitskontrolle von Behältern, insbesondere Transportbehälter**

(30) Priorität: 11.07.2011 DE 102011107584
(71) Anmelder: Rheinmetall Waffe Munition GmbH, 29345 Unterlüss (DE)
(72) Erfinder: Schmitz, Jürgen, Dr., 38518 Gifhorn (DE); Camp, Michael, Dr., 29221 Celle (DE); Jung, Markus, Dr., 29358 Eicklingen (DE)
(74) Vertreter: Dietrich, Barbara

(57) **Zusammenfassung**

Um eine Sicherheitskontrolle von Behältern (1; 1'), insbesondere von Transportbehältern, vorzunehmen, mit der auf einfache Weise automatisch mindestens eine Vorauswahl getroffen werden kann, ob der Inhalt des entsprechenden Behälters (1; 1') näher auf das Vorhandensein sicherheitsgefährlicher Gegenstände (2) untersucht werden sollte oder nicht, schlägt die Erfindung vor, den Inhalt der Behälter (1; 1') insbesondere auf das Vorhandensein von Halbleiterbauelementen oder ggf. auch anderer Bauelemente mit nichtlinearen Übergängen von Grenzschichten (etwa der Kontakte von Bauelementen) mittels eines NLJ-Detektors zu untersuchen, wobei die Frequenz der primären Hochfrequenzstrahlung innerhalb eines definierten Frequenzbereiches kontinuierlich oder schrittweise verändert wird, so dass aus dem Frequenzgang der Oberwellen und ggf. der Materialparameter auf den beispielsweise die Halbleiterbauelemente enthaltenden Gegenstand (2) geschlossen werden kann.

## Beschreibung

Die Erfindung betrifft ein Verfahren auf Basis des breitbandigen Harmonischen Radars zur Sicherheitskontrolle von Behältern, insbesondere von Transportbehältern, auf das Vorhandensein von Sprengfallen, Paketbomben, Sprengstoff und / oder auch deren Komponenten oder anderen gefährlichen Gütern, insbesondere auf das Vorhandensein nichtlinearer elektronischer oder elektrischer Bauelemente. Dabei eingeschlossen ist auch das Erkennen einer in den Behältern eingebrachten improvisierten Sprengfalle. Die Erfindung bezieht sich ferner auf eine Vorrichtung zur Durchführung eines derartigen Verfahrens.

In sicherheitsrelevanten Bereichen, etwa von Flughäfen, ist es üblich, Sicherheitskontrollen von Transportbehältern durchzuführen, um zu vermeiden, dass gefährliche Güter, wie Sprengfallen, Brief- oder Paketbomben und/oder deren Komponenten, ohne rechtsgültige Genehmigung transportiert werden. Hierzu werden die beispielsweise aus Pappe, Holz, Kunststoff, Leder, Stoff oder Glas bestehenden Transportbehälter in der Regel mittels elektromagnetischer Strahlen, etwa Röntgenstrahlen, durchleuchtet und die mit Hilfe einer nachgeschalteten Bildverarbeitung auf einem Bildschirm dargestellten Gegenstände durch geschultes Bedienpersonal ausgewertet (beispielsweise DE 199 59 081 A1, DE 199 54 662 A1, DE 199 43 183 A1).

Derartige Verfahren sind vor allem sehr zeitaufwendig, weil etwa bei der Kontrolle des Handgepäcks von Flugpassagieren jedes einzelne Gepäckstück von dem Bedienpersonal am Bildschirm kontrolliert werden muss. Schließlich ist bei der Sicherheitskontrolle von Transportbehältern aus Metall ein Durchleuchten des Behälters mittels Röntgenstrahlen in der Regel nicht möglich, sodass in diesen Fällen der Transportbehälter zwecks Kontrolle seines Inhaltes manuell geöffnet werden muss.

Aus der DE 10 2006 038 627 A1 ist es bekannt, nichtlineare elektronische Bauelemente oder Schaltungen, wie sie bei Zündeinrichtungen von Bomben verwendet werden, mit Hilfe eines Detektors zum Aufspüren nichtlinearer Übergänge von Grenzschichten, insbesondere der p-n- Übergänge von Halbleiterbauelementen (Dioden, Transistoren etc.) zu ermitteln. Die Arbeitsweise dieser beispielsweise auch in der WO 02/065419 A1 beschriebenen, und als NLJ-Detektoren bezeichneten Detektoren (NLJ-Detektor: Non-Linear Junction-Detektor) besteht darin, dass ein primäres Hochfrequenzsignal von einer mit einem Hochfrequenzsender verbundenen Sendeantenne auf den zu untersuchenden Gegenstand gestrahlt wird. Sind in dem Gegenstand beispielsweise Halbleiterbauelemente vorhanden, so induziert die primäre Hochfrequenzstrahlung eine Spannung an den p-n-Übergängen des entsprechenden Halbleiterbauelementes, der wie ein stromdurchflossener Leiter wirkt und somit ein eigenes elektromagnetisches Feld induziert, dessen zweite und/oder dritte Oberwellen (sekundäre Hochfrequenzstrahlung) wiederum über eine Empfangsantenne von einer Empfangs- und Auswerteeinheit empfangen und ausgewertet werden.

Wie aus der DE 10 2006 038 627 A1 ebenfalls bekannt ist, sollte die Frequenz der primären Hochfrequenzstrahlung innerhalb eines definierten Frequenzbereiches kontinuierlich oder schrittweise verändert werden, um einen elektronischen "Fingerabdruck" (Frequenzgang der Oberwellen und ggf. der Materialparameter) zu erhalten und ggf. auch eine Erkennung der die Halbleiterbauelemente enthaltenden Schaltung zu erreichen. Außerdem können dadurch auch Änderungen/Manipulationen des Behälterinhaltes während der Transportkette ermittelt werden.

Der Erfindung liegt die Aufgabe zugrunde, davon ausgehend, ein Verfahren zur Sicherheitskontrolle von Behältern, insbesondere von Transportbehältern, der eingangs erwähnten Art anzugeben. Ferner soll eine Vorrichtung zur Durchführung des Verfahrens offenbart werden.

Diese Aufgabe wird hinsichtlich des Verfahrens erfindungsgemäß durch die Merkmale des Anspruchs 1 und hinsichtlich der Vorrichtung durch die Merkmale des Anspruchs 2 gelöst. Weitere, besonders vorteilhafte Ausgestaltungen der Erfindung offenbaren die Unteransprüche.

Die Erfindung beruht im Wesentlichen auf dem Gedanken, auf einfache Weise automatisch zumindest eine Vorauswahl zu treffen, ob der Behälter näher auf das Vorhandensein sicherheitsgefährlicher Gegenstände untersucht werden sollte oder nicht, also in einer Art 1.Stufe oder Vorstufe eine selektive Vorauswahl zu treffen. Dazu wird der Inhalt der einer Sicherheitskontrolle unterliegenden Behälter, insbesondere Transportbehälter, auf das Vorhandensein von Halbleiterbauelementen oder ggf. auch anderer Bauelemente mit nichtlinearen Übergängen von Grenzschichten (etwa der aus unterschiedlichen Materialien bestehenden Kontakte von Bauelementen und Bauelementeaufnahmeeinrichtungen) mittels eines NLJ-Detektors zu untersuchen, wobei -wie in der DE 10 2006 038 627 A1 beschrieben- die Frequenz der primären Hochfrequenzstrahlung innerhalb eines definierten Frequenzbereiches kontinuierlich oder schrittweise verändert wird. Aus dem Frequenzgang der Oberwellen und ggf. der Materialparameter kann dann auf die die Halbleiterbauelemente enthaltende Schaltung geschlossen werden.

Sofern die Wände des jeweiligen Behälters aus einem dielektrischen Material, etwa aus Kunststoff, Holz, Pappe etc., besteht, können die Sende- und Empfangsantenne des NLJ-Detektors außerhalb des Behälters angeordnet werden.

Bei größeren, insbesondere normenmäßig festgelegten (Transport-) Behältern hat es sich als vorteilhaft erwiesen, wenn der NLJ-Detektor mindestens eine an einer ersten Innenwand des Transportbehälters angeordnete, mit einem durchstimmbaren Hochfrequenzsender verbindbare innere Sendeantenne sowie mindestens eine an einer zweiten Innenwand des Transportbehälters angeordnete, mit einer Empfangs- und Auswerteeinheit verbindbare innere Empfangsantenne umfasst, wobei vorzugsweise die innere Sendeantenne und/oder die innere Empfangsantenne jeweils über mindestens eine Verbindungsleitung mit an der Außenseite des Transportbehälters befindlichen Verbindungselementen verbunden sind.

Um die Sicherheitskontrolle des jeweiligen Behälters möglichst schnell vornehmen zu können, hat es sich ferner als vorteilhaft erwiesen, wenn der Hochfrequenzsender und die Empfangs- und Auswerteeinheit drahtlos mit den Verbindungselementen verbunden sind. Hierzu sind das mit der inneren Sendeantenne verbundene Verbindungselement als außenseitige Empfangsantenne und das mit der inneren Empfangsantenne verbundene Verbindungselement als außenseitige Sendeantenne ausgebildet, wobei die außenseitige Empfangsantenne Signale des mit der äußeren Sendeantenne verbundenen Hochfrequenzsenders empfängt und die außenseitige Sendeantenne Signale an die mit der äußeren Empfangsantenne verbundenen Empfangs- und Auswerteeinheit sendet.

Es kann aber auch vorgesehen sein, dass der durchstimmbare Hochfrequenzsender und/oder die Empfangs- und Auswerteeinheit in den Behälter integriert sind.

Weitere Einzelheiten und Vorteile der Erfindung ergeben sich aus den folgenden, anhand von Figuren erläuterten Ausführungsbeispielen. Es zeigen:
- Fig.1: eine schematische Darstellung eines ersten Ausführungsbeispiels der Erfindung, bei dem eine drahtlose Kopplung des außerhalb eines Transportbehälters befindlichen Hochfrequenzsenders und Empfangs- und Auswerteeinheit mit innerhalb des Transportbehälters befindlichen inneren Sende- und Empfangsantennen erfolgt,
- Fig.2: eine schematische Darstellung eines zweiten Ausführungsbeispiels der Erfindung, bei dem der Hochfrequenzsender und die Empfangs- und Auswerteeinheit in das Transportgehäuse integriert sind.

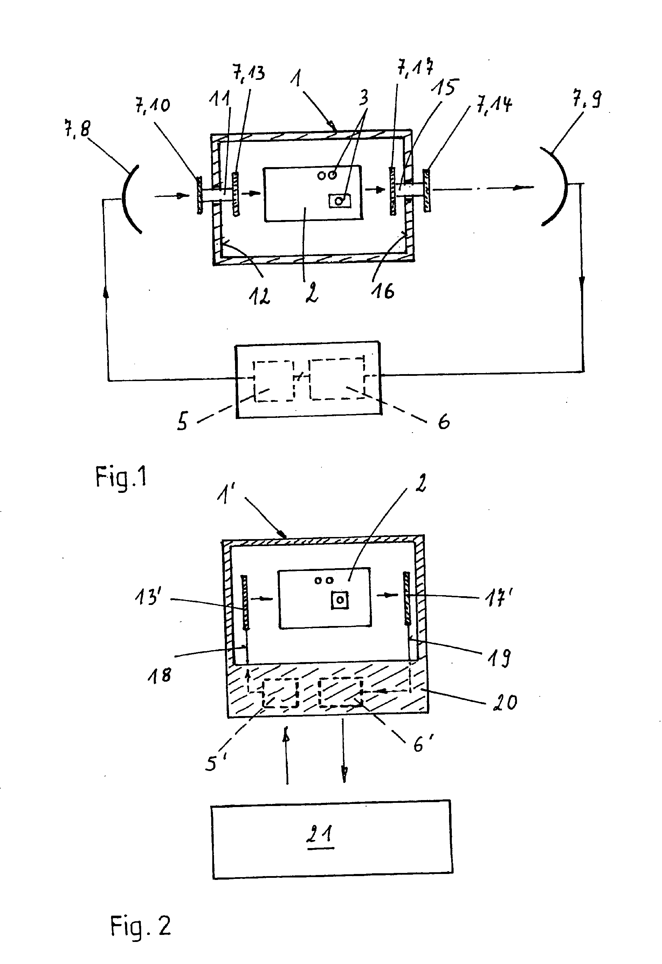

In Fig.1 ist mit 1 ein Transportbehälter aus Metall bezeichnet, in dem sich Gegenstände 2 mit nichtlinearen elektronischen Komponenten 3 (beispielsweise Halbleiterbauelementen der Zündeinrichtung einer Paketbombe) befinden. Beim Transportbehälter kann es sich beispielsweise um eine Gitterbox handeln.

Zur Durchführung einer Sicherheitskontrolle des Transportbehälters 1 ist erfindungsgemäß ein NLJ-Detektor vorgesehen, der im Wesentlichen einen durchstimmbaren Hochfrequenzsender 5 (bei dem vorliegenden Ausführungsbeispiel handelt es sich um einen Mikrowellensender), eine Empfangs- und Auswerteeinheit 6 und eine aus mehreren Antennen bestehende Antennenanordnung 7 umfasst.

Die Antennenanordnung 7 weist eine außerhalb des Transportbehälters 1 angeordnete äußere Sendeantenne 8 sowie eine ebenfalls außerhalb des Transportbehälters 1 angeordnete äußere Empfangsantenne 9 auf. Ferner umfasst die Antennenanordnung 7 eine an dem Transportbehälter 1 befestigte, außenseitige Empfangsantenne 10, die über eine erste Verbindungsleitung 11 mit einer an einer ersten Innenwand 12 des Transportbehälters 1 angeordneten inneren Sendeantenne 13 verbunden ist, sowie eine an dem Transportbehälter 1 befestigte, außenseitige Sendeantenne 14, die über eine zweite Verbindungsleitung 15 mit einer an einer der ersten Innenwand 12 gegenüberliegenden zweiten Innenwand 16 des Transportbehälters 1 angeordnete innere Empfangsantenne 17 in Wirkverbindung steht.

Jede der Antennen 8-10, 13, 14 und 17 ist derart aufgebaut, dass sie ultrabreitbandige Signale verarbeiten kann, wobei die an dem Transportbehälter 1 angeordneten Antennen 10, 13 und 14, 17 bei dem in Fig.1 dargestellten Ausführungsbeispiel planar aufgebaut sind.

Zur Durchführung der Sicherheitskontrolle des Transportbehälters 1 sendet der durchstimmbare Hochfrequenzsender 5 über die äußere Sendeantenne 8 ein kontinuierliches, gepulstes oder beliebig moduliertes Signal mit sinusähnlichen Trägern aus, welches von der außenseitigen Empfangsantenne 10 verzerrungsfrei empfangen und über die erste Verbindungsleitung 11 zu der inneren Sendeantenne 13 transferiert wird. Die innere Sendeantenne 13 beaufschlagt den Gegenstand 2 mit dem definierten primären Hochfrequenzsignal und sendet aufgrund der nichtlinearen elektronischen Komponenten 3 Oberwellensignale, die von der inneren Empfangsantenne 17 empfangen und von der außenseitigen Sendeantenne 14 abgestrahlt werden. Die äußere Empfangsantenne 9 empfängt die entsprechenden Hochfrequenzsignale und führt diese der Empfangs- und Auswerteeinheit 6 zwecks Analyse der zweiten und/oder dritten Oberwellen im Vergleich zu den primären Hochfrequenzsignalen zu. Dabei wird ein definierter Frequenzbereich schrittweise durchlaufen, um einen elektronischen Fingerabdruck (Frequenzgang der Oberwellen) zu erhalten und ggf. eine Erkennung des Gegenstandes zu ermöglichen.

In dem in Fig.2 dargestellten Ausführungsbeispiel ist ein Transportbehälter 1' vorgesehen, in dem sich eine innere Sendeantenne 13' und eine innere Empfangsantenne 17' befinden, welche über entsprechende Leitungen 18, 19 mit einem Hochfrequenzsender 5' und einer Empfangs- und Auswerteeinheit 6' verbunden sind. Dabei sind der Hochfrequenzsender 5' und die Empfangs- und Auswerteeinheit 6' in die bodenseitige Wand 20 des Transportbehälters 1' integriert.

Die Ansteuerung (Triggerung) des Hochfrequenzsenders 5' und die weitere Verarbeitung der durch die Empfangs- und Auswerteeinheit 6' vorverarbeiteten Daten erfolgt mit Hilfe einer Datenverarbeitungseinrichtung 21, die über eine drahtlose Verbindung mit dem Hochfrequenzsender 5' und der Empfangs- und Auswerteeinheit 6' in Wirkverbindung steht.

Die Erfindung ist selbstverständlich nicht auf die in den Figuren dargestellten Ausführungsbeispiele beschränkt. So können beispielsweise die innere Sendeantenne und die innere Empfangsantenne an der gleichen Innenwand des Transportgehäuses angeordnet sein oder durch eine einzige (Sende-/Empfangs-) Antenne ersetzt werden.

Ferner muss es sich bei den Behältern nicht zwingend um Transportbehälter handeln. Vielmehr kann es zweckmäßig sein, etwa Gepäckstücke, wie Taschen etc., kurzzeitig in einen stationär angeordneten Behälter mit NLJ-Detektor etwa über eine entsprechende verschließbare Öffnung einzubringen und auf das Vorhandensein nicht linearer elektronischer oder elektrischer Bauelemente zu überprüfen.

### Bezugszeichenliste

- 1,1': Transportbehälter, Behälter
- 2: Gegenstand
- 3: elektronische Komponente
- 5,5': Hochfrequenzsender
- 6,6': Empfangs- und Auswerteeinheit
- 7: Antennenanordnung
- 8: äußere Sendeantenne
- 9: äußere Empfangsantenne
- 10: außenseitige Empfangsantenne, Verbindungselement
- 11: erste Verbindungsleitung
- 12: erste Innenwand
- 13,13': innere Sendeantenne
- 14: außenseitige Sendeantenne, Verbindungselement
- 15: zweite Verbindungsleitung
- 16: zweite Innenwand
- 17,17': innere Empfangsantenne
- 18,19: Leitungen
- 20: bodenseitige Wand
- 21: Datenverarbeitungseinrichtung

## Patentansprüche

1. Verfahren zur Sicherheitskontrolle von Behältern, insbesondere von Transportbehältern, auf das Vorhandensein nichtlinearer elektronischer oder elektrischer Bauelemente, mit den Merkmalen:
a) die in dem Behälter (1; 1') befindlichen Gegenstände (2) werden mit Hilfe eines Detektors zum Aufspüren nichtlinearer Übergänge von Grenzschichten (NLJ-Detektor) untersucht, wobei die zu untersuchenden Gegenstände (2) mit primären Hochfrequenzsignalen bestrahlt werden, deren Frequenz innerhalb eines definierten Frequenzbereiches kontinuierlich oder schrittweise verändert wird, und wobei mittels einer Empfangs- und Auswerteeinheit (6; 6') ermittelt wird, ob bei der Bestrahlung der Gegenstände (2) eine sekundäre Hochfrequenzstrahlung erzeugt wird, deren Frequenz der zweiten und/oder dritten Oberwelle der primären Hochfrequenzsignale entspricht, und
b) dass beim Auftreten einer sekundären Hochfrequenzstrahlung diese in Abhängigkeit von der jeweiligen Frequenz und/oder Amplitude der primären Hochfrequenzsignale in einer Empfangs- und Auswerteeinheit (6; 6') ausgewertet wird.

2. Vorrichtung zur Durchführung des Verfahrens nach Anspruch 1, **dadurch gekennzeichnet, dass** der NLJ-Detektor mindestens eine an einer ersten Innenwand (12) des Behälters (1; 1') angeordnete, mit einem durchstimmbaren Hochfrequenzsender (5; 5') verbindbare innere Sendeantenne (13; 13') sowie mindestens eine an einer zweiten Innenwand (16) des Behälters (1; 1') angeordnete, mit der Empfangs- und Auswerteeinheit (6; 6') verbindbare innere Empfangsantenne (17; 17') umfasst.

3. Vorrichtung nach Anspruch 2, **dadurch gekennzeichnet, dass** die innere Sendeantenne (13) und/oder die innere Empfangsantenne (17) jeweils über mindestens eine Verbindungsleitung (11, 15) mit an der Außenseite des Behälters (1) befindlichen Verbindungselementen (10, 14) verbunden sind.

4. Vorrichtung nach Anspruch 3, **dadurch gekennzeichnet, dass** das mit der inneren Sendeantenne (13) verbundene Verbindungselement (10) als außenseitige Empfangsantenne und das mit der inneren Empfangsantenne (17) verbundene Verbindungselement (14) als außenseitige Sendeantenne ausgebildet sind, und dass die außenseitige Empfangsantenne (10) Signale des mit einer äußeren Sendeantenne (8) verbundenen Hochfrequenzsenders (5) empfängt und die außenseitige Sendeantenne (14) Signale an die mit einer äußeren Empfangsantenne (9) verbundenen Empfangs - und Auswerteeinheit (6) sendet.

5. Vorrichtung nach Anspruch 2, **dadurch gekennzeichnet, dass** der durchstimmbare Hochfrequenzsender (5') und/oder die Empfangs- und Auswerteeinheit (6') in den Behälter (1') integriert sind.

6. Vorrichtung nach einem der Ansprüche 2 bis 5, **dadurch gekennzeichnet, dass** es sich bei der inneren Sendeantenne (13; 13') und/oder bei der inneren Empfangsantenne (17; 17') um planar ausgebildete Antennen handelt.

7. Vorrichtung nach einem der Ansprüche 2 bis 6, **dadurch gekennzeichnet, dass** der Behälter (1;1') aus Metall besteht.
